# EUROPEAN PATENT SPECIFICATION

(11) **EP 4 253 671 B1**
(45) Date of publication and mention of the grant of the patent: **22.10.2025**
(21) Application number: 23161191.4
(22) Date of filing: 10.03.2023
(51) Int. Cl.: E02F 9/26, E02F 3/76

(54) **LASER SCANNING METHOD, LASER SCANNING SYSTEM, AND LASER SCANNING PROGRAM**
LASERABTASTVERFAHREN, LASERABTASTSYSTEM UND LASERABTASTPROGRAMM
PROCÉDÉ DE BALAYAGE LASER, SYSTÈME DE BALAYAGE LASER ET PROGRAMME DE BALAYAGE LASER

(30) Priority: 31.03.2022 JP 2022058627
(43) Date of publication of application: 04.10.2023
(73) Proprietor: TOPCON CORPORATION, Tokyo 174-8580 (JP)
(72) Inventor: SASAKI, You, Tokyo, 174-8580 (JP)
(74) Representative: Eisenführ Speiser

(56) References cited:
- EP-A1- 2 230 483
- EP-A2- 3 470 783
- EP-B1- 3 194 666

## Description

### BACKGROUND OF THE INVENTION

### Technical Field

The present invention relates to a technique for laser scanning.

### Background Art

Some techniques using laser scanning are employed, for example, as means for construction management at civil engineering sites (for example, refer to Japanese Unexamined Patent Application Publication No. 2021-56152). In addition, some techniques using a global navigation satellite system (GNSS) are also known as means for position control of construction machines at civil engineering sites (for example, refer to Japanese Patent No. 6964168). Moreover, techniques for controlling blades (blades of shovels, etc.) of construction machines are also known (refer to Japanese Patent No. 6794449).

### SUMMARY OF THE INVENTION

Existing techniques involve controlling blades of construction machines and measuring finished work quality at civil engineering sites, which operations are performed by individual technical means. For example, measurement using a surveying apparatus is performed for each purpose such that current data is obtained by performing laser scanning before a construction machine is operated, a blade is identified by a surveying apparatus to control the blade during operation of the construction machine, and finished work quality is measured by performing laser scanning after operation is finished.

This existing method requires performing measurements individually, and therefore, improvement is desired from the point of view of operation time and operation cost. In view of these circumstances, an object of the present invention is to provide a technique that enables efficient construction management at civil engineering sites.

EP 3 194 666 B1 relates to a guidance system that helps an earthmoving machine operator to control exactly to what elevation to dig. The system includes an electronic sensing and a display monitor. In one embodiment, the electronic sensing device includes a distance measuring sensor, an elevation detecting sensor, an orientation sensor, and a steering mechanism for the LDM. The sensing device is mounted to an earthmoving machine, and sends signals to the display showing the machine operator where to move the digging tool for digging to the desired elevation. The various sensors in the sensing device are calibrated at the factory, so the sensing device can be mounted to an earthmoving machine and then be immediately used by that machine without needing any calibration that involves the machine itself, which is a huge advantage for the equipment operator. The measurements are made via non-contact sensors, thereby preserving the jobsite surface.

The present invention provides a laser scanning method including a first laser scanning and a second laser scanning. The first laser scanning is performed on a blade of a construction machine by a laser scanning apparatus. The second laser scanning is performed on an area in which the construction machine has operated, by the laser scanning apparatus. The first laser scanning is performed at a frequency higher than a frequency of the second laser scanning.

In one aspect of the present invention, the first laser scanning may be performed in order to control the blade. In another aspect of the present invention, the second laser scanning may be performed over a scanning range that covers at least a part of the construction machine. In yet another aspect of the present invention, operation may be shifted from the first laser scanning to the second laser scanning, based on a position of the blade that is identified by the first laser scanning.

In yet another aspect of the present invention, operation may be shifted from the first laser scanning to the second laser scanning, in response to a distance between the position of the blade identified by the first laser scanning and a work target of the blade, exceeding a predetermined value.

The present invention also provides a laser scanning system including a laser scanning apparatus and a controller. The laser scanning apparatus is configured to perform first laser scanning on a blade of a construction machine and to perform second laser scanning on an area in which the construction machine has operated. The controller is configured to cause the first laser scanning to be performed at a frequency higher than a frequency of the second laser scanning.

The present invention also provides a non-transitory computer recording medium storing computer executable instructions for performing laser scanning. The computer executable instructions are made to, when read and executed by a computer processor, cause the computer processor to make a laser scanning apparatus perform first laser scanning on a blade of a construction machine and to make the laser scanning apparatus perform second laser scanning on an area in which the construction machine has operated. The first laser scanning is performed at a frequency higher than a frequency of the second laser scanning.

The present invention enables efficiently performing construction management and control of construction machines at civil engineering sites.

### BRIEF DESCRIPTION OF DRAWINGS

Fig. 1 is a schematic diagram of an embodiment.
Fig. 2 is a schematic diagram of the embodiment.
Fig. 3 is a block diagram of a data processing device.
Fig. 4 is a timing chart of scanning.
Fig. 5 is a flowchart showing an example of a processing procedure.

### PREFERRED EMBODIMENTS OF THE INVENTION

### 1. First Embodiment

### Overview

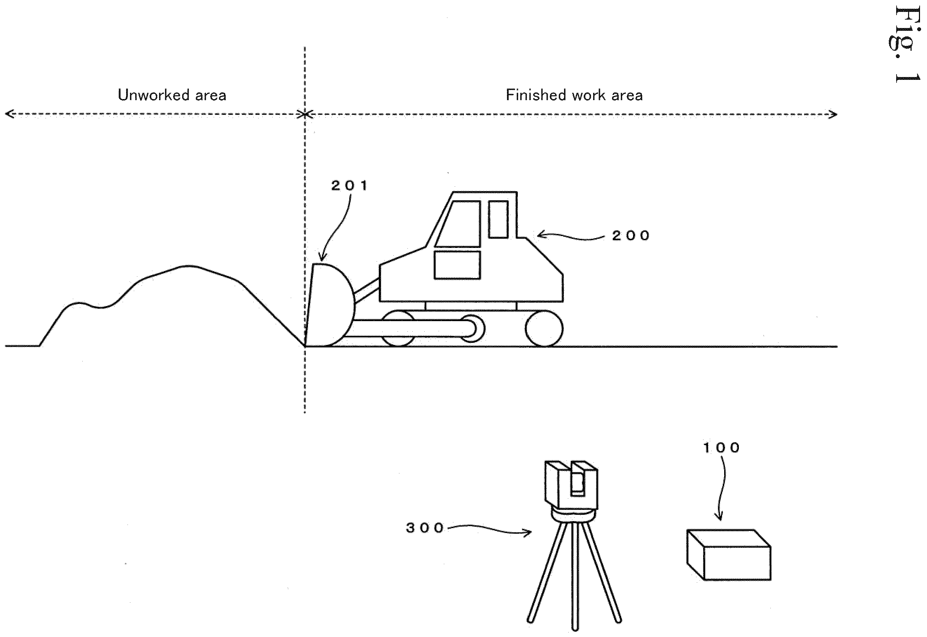

Fig. 1 shows a construction machine 200 equipped with a blade 201. In this example, the construction machine 200 is a bulldozer, and the blade 201 is a plate for pushing soil and sand to remove them or level a ground. The construction machine 200 is not limited to this example and may be any machine used for construction work, such as a power shovel or a wheel loader. In one example in which the construction machine 200 is a power shovel, the blade 201 is a shovel. Fig. 1 shows an example in which the construction machine 200 levels the ground to make the landform flat, moving from right to left in the drawing.

Fig. 1 shows a laser scanning apparatus 300. The laser scanning apparatus 300 includes a horizontal rotation unit, a vertical rotation unit that is disposed on the horizontal rotation unit, and an optical system for emitting and receiving distance measuring laser light (scanning light) at the vertical rotation unit. Laser scanning is conducted as follows: pulses of scanning light are emitted from the optical system while the horizontal rotation unit is rotated horizontally and the vertical rotation unit is rotated vertically.

The laser scanning apparatus 300 is adjusted in ranges of rotation of the rotation units and a range of emission of pulses of light (or a range of reception of light), whereby laser scanning is performed on a certain area. The type and system of the laser scanning apparatus are not specifically limited. For example, scanning may be performed by mechanically reciprocating an optical axis of an optical system in a certain range, or a laser scanner that electronically sweeps scanning light may be used. **It** is also possible to use a laser scanning apparatus that emits many beams of measurement light along a plane at the same time to obtain point cloud data from a certain area at a time. **In** another case, the laser scanning apparatus 300 can be a type having a camera in which exterior orientation parameters (position and attitude) with respect to the laser scanning apparatus 300 are already known.

In the example in Fig. 1, the laser scanning apparatus 300 is used to perform (1) laser scanning in a wide area around the construction machine 200, including the construction machine 200 (wide area scanning), (2) laser scanning in a limited area centering on the blade 201 (blade scanning), and (3) laser scanning in an area in which work is finished by the construction machine 200 (finished work area scanning).

Herein, the ranges of the blade scanning operation (2) and the finished work area scanning operation (3) are determined based on result of the wide area scanning operation (1). The blade scanning operation (2) is performed at a relatively high rate, whereas the finished work area scanning operation (3) is performed at a relatively low rate. These operations are performed to capture the blade 201 and observe changes in landform.

Processes related to scanning data obtained by the operations (1) to (3), control of the blade 201 based on the scanning data, and measurement of finished work quality, are performed by a data processing device 100. Although Fig. 1 shows an example of performing construction work on the ground, construction work may be performed on a building or a structure.

The laser scanning apparatus 300 performs the blade scanning operation (2) and the finished work area scanning operation (3), respectively at appropriate timing. Thus, control of the blade 201 and calculation of finished work quality can be performed by successive laser scanning with the use of one laser scanning apparatus.

### Data Processing Device

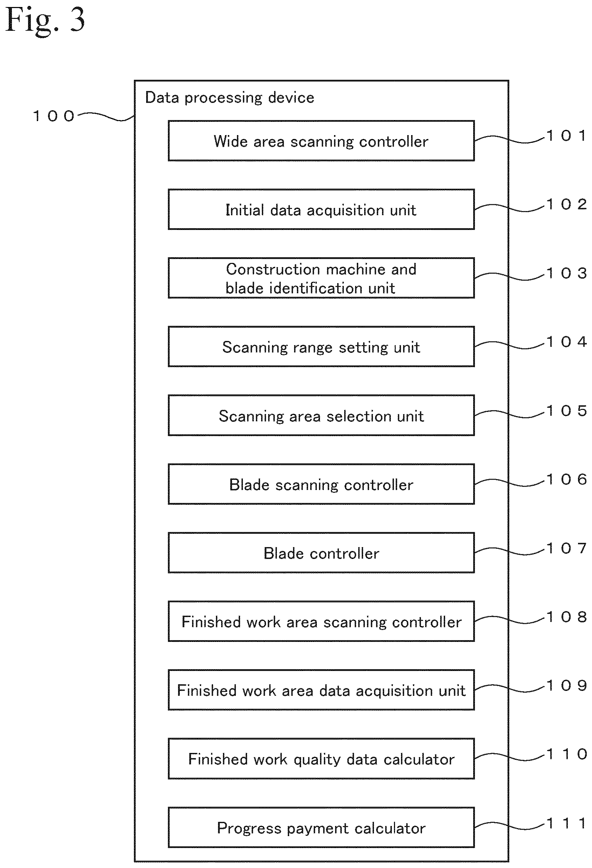

Fig. 3 is a block diagram of the data processing device 100. The data processing device 100 includes a computer. This computer includes a central processing unit (CPU), a storage, a communication interface, an interface for handling a control signal of the construction machine 200, and a user interface. The computer to be used may be a general-purpose computer or a dedicated computer. For example, the data processing device 100 can be implemented by using a personal computer (PC) or a data processing server.

The data processing device 100 includes a wide area scanning controller 101, an initial data acquisition unit 102, a construction machine and blade identification unit 103, a scanning range setting unit 104, a scanning area selection unit 105, a blade scanning controller 106, a blade controller 107, a finished work area scanning controller 108, a finished work area data acquisition unit 109, a finished work quality data calculator 110, and a progress payment calculator 111.

These functional units are implemented in a software manner by operation programs installed in the computer constituting the data processing device 100. One, some, or all of the functional units may be composed of dedicated hardware.

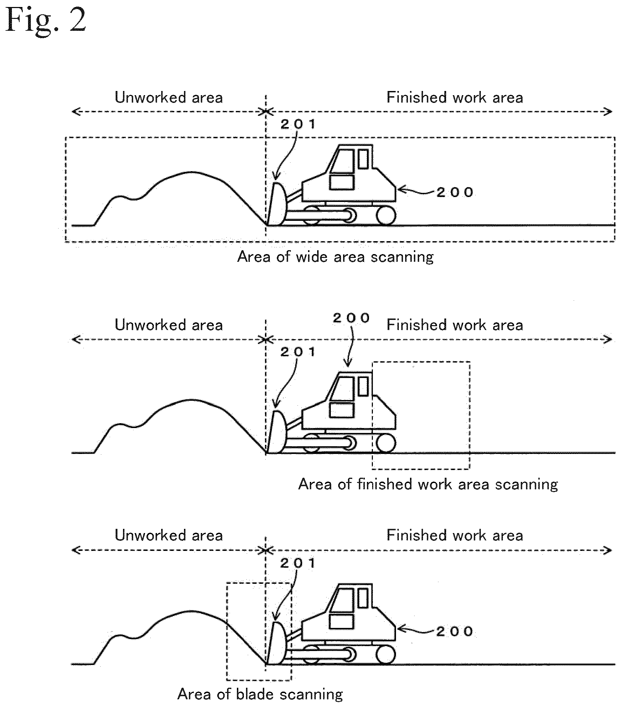

The wide area scanning controller 101 controls laser scanning in a range for wide area scanning shown in Fig. 2. The wide area scanning is performed in order to determine a scanning range of each of the blade scanning and the finished work area scanning. The wide area scanning is performed on an area in which work has been finished and an area in which work is to be performed.

The initial data acquisition unit 102 acquires scanning data obtained by the wide area scanning, as initial data.

The construction machine and blade identification unit 103 identifies the construction machine 200 and the blade 201 based on result of the wide area scanning. The identification is performed by using a reflection target, identifying the shape of a target in point cloud data, or performing these methods together. Alternatively, the blade 201 may be photographed by a camera mounted on the laser scanning apparatus 300, and the blade 201 may be identified in the photographic image. Of course, laser scanning and a photographic image may be used together to identify the blade 201.

In one example, reflection targets (e.g., reflection prisms or retroreflective targets) are arranged on the construction machine 200, in position relationships so as to be apexes of a desired polygon. Light that is reflected back from a reflection target is so intense that it appears as a bright point in a laser-scanned point cloud. These bright points form the desired polygon, and detecting this desired polygon identifies the construction machine 200 in the laser-scanned point cloud.

In another example, a reflection target is disposed at an edge of the blade 201, and detecting this reflection target in a laser-scanned point cloud identifies the blade 201 in the laser-scanned point cloud. Of course, it is also possible to use multiple reflection targets to identify the blade 201. In one example, multiple reflection targets are disposed on the blade 201 so that the shape of the blade 201 can be identified by using multiple bright points due to reflection. In this case, the blade 201 is identified by referring to the shape composed of multiple reflection points having high brightness. This method also enables determining the direction of the blade 201 from the direction of the polygonal shape.

The scanning range setting unit 104 sets ranges of the finished work area scanning and the blade scanning based on position information of the construction machine 200 and the blade 201 acquired by the wide area scanning.

The range of the finished work area scanning is set as a range posterior to the construction machine 200 in the advance direction. Herein, the finished work area scanning is performed so as to cover at least a part of the construction machine 200. The reason of this is described below. The blade scanning is performed after the finished work area scanning. In the condition in which the construction machine 200 is partially captured in the finished work area scanning, the position of the blade 201 is estimated in the step of the blade scanning, resulting in smoothly shifting the operation to the blade scanning. In addition, capturing a part of the construction machine 200 in the finished work area scanning provides the position of the construction machine 200, whereby movement of the construction machine 200 is observed.

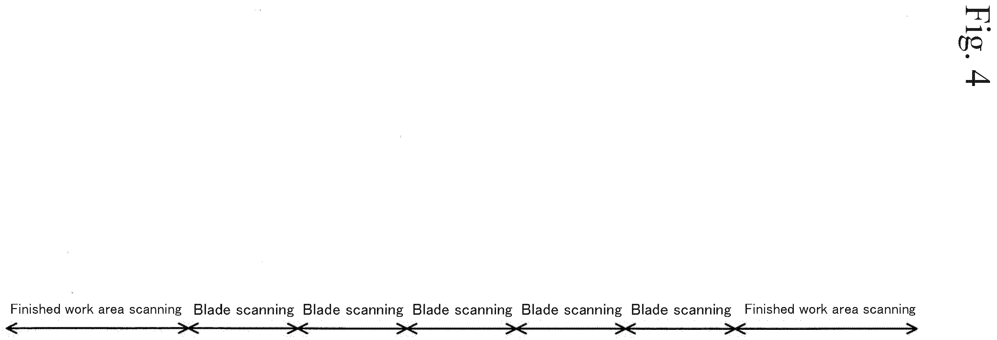

The scanning area selection unit 105 determines timing to perform each of the blade scanning and the finished work area scanning shown in Fig. 2. Fig. 4 shows an example of a timing chart for selecting each of the finished work area scanning and the blade scanning. In this example, the ranges of the blade scanning and the finished work area scanning are set so as to have a relationship as shown in the drawing, and the blade scanning is performed five times per each finished work area scanning. This allocation is controlled by the scanning area selection unit 105.

As shown in the example in Fig. 4, in terms of per unit time, the number of repetitions of the blade scanning is greater than that of the finished work area scanning. This corresponds to the movement of the blade 201 being faster than that of the construction machine 200.

The timing of each of the blade scanning and the finished work area scanning may not be determined in advance, and it may be selected in accordance with movement of the blade 201. For example, the time when movement of the blade 201 stops for a moment, or the time when movement of the blade 201 is slow, is detected from a result of the blade scanning, and the finished work area scanning is executed at this time.

Specifically, for example, in a case in which the blade 201 is displaced upward from the ground surface, movement of the blade 201 is slowed down at the highest position, while work such as cutting is not performed. In view of this, upon detecting this condition based on the blade scanning, the operation is shifted from the blade scanning to the finished work area scanning.

Alternatively, upon detecting the time when work using the blade 201 is not performed, the operation may be shifted from the blade scanning to the finished work area scanning. Specifically, a separation distance of the blade 201 from a work target ground surface may be obtained from a result of the blade scanning. In the case in which this separation distance exceeds a predetermined threshold, the operation may be shifted from the blade scanning to the finished work area scanning.

In another example, the position and the direction of the blade 201 may be determined by the blade scanning, and the operation may be shifted from the blade scanning to the finished work area scanning in accordance therewith. In yet another example, in response to the blade 201 being moved backward (or the construction machine 200 being moved backward), the operation may be shifted from the blade scanning to the finished work area scanning. Of course, it is also possible to perform determination using two or more methods described above and then shift the operation from the blade scanning to the finished work area scanning.

In addition, the above-described methods, that is, the method of selecting the type of scanning in accordance with a predetermined schedule and the method of selecting the type of scanning depending on conditions, can be used together. In one example, the blade scanning is normally selected depending on conditions, but the finished work area scanning is selected when it has not been selected for a certain period of time. Specifically, the finished work area scanning may be selected once per at least every five seconds.

The blade scanning controller 106 controls the blade scanning. The blade controller 107 controls movement of the blade 201 based on a result of the blade scanning.

The following describes an example of control performed by the blade controller 107. As preparation, a 3D model of a terrain (a before-work 3D model) is obtained by preliminarily surveying (e.g., laser scanning). In addition, a planned 3D model of the terrain (a planned after-work 3D model) is created or designed in a drawing or data.

Under these conditions, first, a correspondence relationship between a result of the wide area scanning and the before-work 3D model is determined. The wide area scanning is performed over a range covering a part that is not yet subjected to construction work. Thus, obtaining a correspondence relationship between the part that is not yet subjected to construction work and the before-work 3D model enables determining the corresponding relationship between the result of the wide area scanning and the before-work 3D model.

Herein, the blade scanning is performed based on the result of the wide area scanning, and accordingly, a correspondence relationship between the blade scanning and the wide area scanning is already known. That is, obtaining the correspondence relationship between the result of the wide area scanning and the before-work 3D model enables determining a relationship between the blade scanning and the before-work 3D model.

The before-work 3D model and the planned after-work 3D model are compared with each other, and movement of the blade 201 is controlled to perform working corresponding to the difference therebetween. This control is performed by the blade controller 107.

For example, the before-work 3D model and the planned after-work 3D model are compared with each other to calculate an area of soil and sand to remove. Next, a movement trajectory of the blade 201 necessary to remove soil and sand in the calculated area is then calculated. For a calculated area that is so large that it cannot be finished in a single removal, the trajectory of the blade 201 is set so as to be in a process for multiple removals.

After the trajectory of the blade 201 is set, change in position of the blade 201 is observed by the blade scanning, and a control signal for adjusting the position of the blade 201 is transmitted to the construction machine 200 in order to prevent the blade 201 from deviating from the set trajectory. Thus, the position of the blade 201 is controlled in real time.

In one case, information of a difference between the set trajectory and an actual trajectory (measured by laser scanning) of the blade 201 may be transmitted to the construction machine 200 and may be referred to by an operator of the construction machine 200 for the purpose of controlling the blade 201. In another case, this information may be used to assist the operator in controlling. These processes are performed by the blade controller 107.

The finished work area scanning controller 108 controls the finished work area scanning. The finished work area data acquisition unit 109 acquires point cloud data that is obtained in the finished work area scanning.

The finished work quality data calculator 110 calculates finished work quality based on the point cloud data obtained by the finished work area scanning. The following describes an example of calculation of finished work quality.

As described above, the correspondence relationship between result of the wide area scanning and the before-work 3D model can be determined. In addition, the finished work area scanning is performed based on result of the wide area scanning, and accordingly, a correspondence relationship between the result of the wide area scanning and the result of the finished work area scanning can also be determined. Thus, a correspondence relationship between result of the finished work area scanning and the before-work 3D model can be determined.

Under these conditions, a difference between the result of the finished work area scanning and the before-work 3D model is calculated to obtain finished work quality. In one example, an amount of change of landform that has been scraped or piled up by the blade 201 is calculated. This amount of change of landform is finished work quality.

The progress payment calculator 111 calculates a progress payment based on the finished work quality. For example, cost per 1 m3 of soil and sand is set as a unit cost in advance. In this state, the progress payment is calculated from (unit cost) × (finished work quality).

### Example of Processing

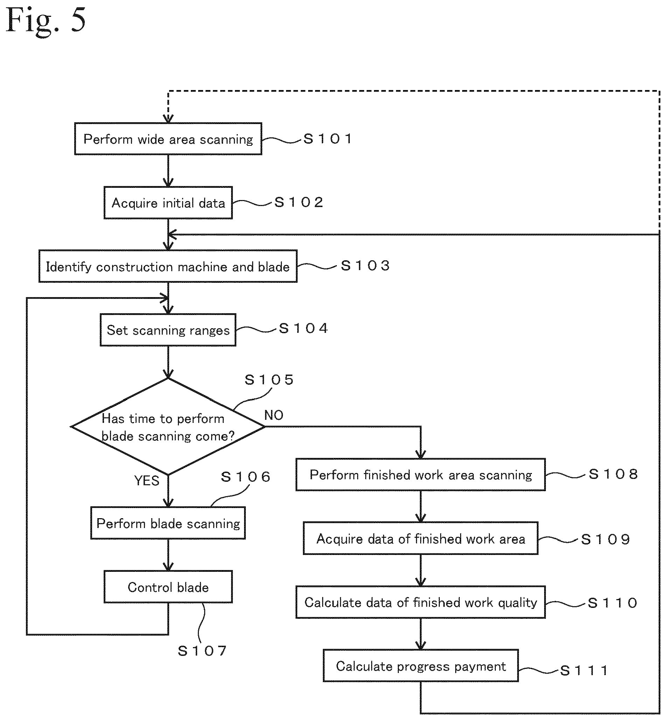

Fig. 5 is a flowchart showing an example of processing performed by the data processing device 100. The program for executing the processing in the flowchart is stored in the storage of the data processing device 100 and is executed by the CPU of the data processing device 100. It is also possible to store this program for the flowchart in an appropriate storage medium and to download this program therefrom.

First, the wide area scanning as shown in Fig. 2 is performed (step S101). The wide area scanning is controlled by the wide area scanning controller 101. Then, point cloud data that is obtained by the wide area scanning is acquired as initial data (step S102). The initial data is acquired by the initial data acquisition unit 102. After the initial data is acquired, the construction machine 200 and the blade 201 are identified in the initial data (step S103). This process is performed by the construction machine and blade identification unit 103.

After the construction machine 200 and the blade 201 are identified, scanning ranges are set (step S104). Herein, the range of the finished work area scanning, as shown in Fig. 2, is set based on the position of the construction machine 200, whereas the range of the blade scanning is set based on the position of the blade 201. This process is performed by the scanning range setting unit 104.

Next, it is determined whether the time to perform the blade scanning has come (step S105). This process is performed by the scanning area selection unit 105. In a state in which the time to perform the blade scanning has come, the blade scanning is performed (step S106); otherwise, the finished work area scanning is performed (step S108).

After the blade scanning is performed (step S106) and point cloud data around the blade 201 is obtained, the blade 201 is controlled based on this data (step S107). This process is performed by the blade controller 107.

After the finished work area scanning is performed in step S108, point cloud data that is obtained by this scanning is acquired as data of the finished work area (step S109), and data of the finished work quality is calculated (step S110). The data of the finished work quality is calculated by the finished work quality data calculator 110. After the data of the finished work quality is calculated, a progress payment is calculated (step S111). The progress payment is calculated by the progress payment calculator 111. In some cases, only one of the finished work quality and the progress payment may be calculated.

In response to the construction machine 200 moving by an amount equal to or greater than a threshold or to a specified time having elapsed, the processes in step S101 and the subsequent steps are resumed. For example, when the construction machine 200 moves by an amount exceeding a predetermined threshold, the processes in step S101 and the subsequent steps are repeated. The movement of the construction machine 200 is obtained from scanning data or a value measured by a GNSS position measurement device equipped on the construction machine 200. Repeating the processes in step S101 and the subsequent steps updates the point cloud data of an area that is not yet subjected to construction work. In this case, the wide area scanning is repeated in accordance with movement of the construction machine 200, and thus, the scanning range of the wide area scanning can be narrowed. This is effective for increasing the scanning density of the wide area scanning. In response to performing the wide area scanning again, the trajectory of the blade 201 is set again each time.

### 2. Second Embodiment

In addition to the laser scanning apparatus 300, a total station may be used therewith. The total station captures and tracks the blade 201. In response to the total station detecting movement of the blade 201 (e.g., movement toward a ground surface) while the blade scanning is not performed, the operation is shifted to blade scanning. This avoids occurrence of unintentional operation due to failure to timely control the blade 201. In addition, the total station continuously tracks the position of the blade 201, resulting in smoothly shifting the operation to the blade scanning. The blade 201 can also be controlled based on position information of the blade 201 that is tracked by the total station.

Some surveying apparatuses are known to have a combination of a laser scanning device and a total station and thereby exert functions thereof. This surveying device may be employed to measure the position of the blade 201 by using the function of the total station while performing laser scanning.

### 3. Third Embodiment

Multiple laser scanning apparatuses may be used. In this case, three or more 360-degree circumferential reflective prisms are disposed at mutually different horizontal positions and at mutually different height positions, on the construction machine 200. The multiple laser scanning apparatuses are operated synchronously with one another.

First, wide area scanning is performed by each laser scanning apparatus at the same time, and the three or more 360-degree circumferential reflective prisms on the construction machine 200 are identified as common points in the scanning data of each scanning. The three or more common points are used to determine correspondence relationships between pieces of point cloud data that are obtained by the laser scanning apparatuses. This embodiment is basically the same as the first embodiment, except that multiple laser scanning apparatuses are used.

In this example, a blind spot as seen from one laser scanning apparatus can be scanned by another laser scanning apparatus. This reduces blind spots in laser scanning and thereby enables higher accuracy measurement. Preferably, as many laser scanning apparatuses are used as cost permits.

In one method, multiple laser scanning apparatuses may be set up so that respective exterior orientation parameters in the same coordinate system can be determined. In this case, the exterior orientation parameters of each laser scanning apparatus are already known, and pieces of point cloud data of the construction machine 200 obtained by the laser scanning apparatuses can be integrated without using a reflection prism or other target.

### 4. Fourth Embodiment

In the third embodiment, the times of the blade scanning and the finished work area scanning performed by a first laser scanning apparatus and the times of the blade scanning and the finished work area scanning performed by a second laser scanning apparatus may be distinguished from each other.

For example, while the first laser scanning apparatus performs the blade scanning, the second laser scanning apparatus performs the finished work area scanning. Then, while the second laser scanning apparatus performs the blade scanning, the first laser scanning apparatus performs the finished work area scanning.

In the case of using three or more laser scanning apparatuses, each type of scanning can be performed by at least one laser scanning apparatus at some point in time, whereby multiple types of scanning can be executed at the same time.

In this example, a first laser scanning apparatus is configured to perform first laser scanning on the blade 201 of the construction machine 200 and to perform second laser scanning on the area in which the construction machine 200 has operated. While the first laser scanning apparatus performs the first laser scanning, a second laser scanning apparatus that is different from the first laser scanning apparatus performs the second laser scanning.

Conversely, while the first laser scanning apparatus performs the second laser scanning, the second laser scanning apparatus, which is different from the first laser scanning apparatus, performs the first laser scanning. The method of this embodiment enables reduction of a period in which each type of scanning is not conducted.

## Claims

1. A laser scanning method comprising:
a first laser scanning performed on a blade (201) of a construction machine (200) by a laser scanning apparatus (300); and
a second laser scanning performed on an area in which the construction machine (200) has operated, by the laser scanning apparatus (300),
**characterized in that** the first laser scanning is performed at a frequency higher than a frequency of the second laser scanning.

2. The laser scanning method according to claim 1, wherein the first laser scanning is performed in order to control the blade (201).

3. The laser scanning method according to claim 1 or 2, wherein the second laser scanning is performed over a scanning range that covers at least a part of the construction machine (200).

4. The laser scanning method according to any one of claims 1 to 3, wherein operation is shifted from the first laser scanning to the second laser scanning, based on a position of the blade (201) that is identified by the first laser scanning.

5. The laser scanning method according to claim 4, wherein operation is shifted from the first laser scanning to the second laser scanning, in response to a distance between the position of the blade (201) identified by the first laser scanning and a work target of the blade (201), exceeding a predetermined value.

6. A laser scanning system comprising:
a laser scanning apparatus (300) configured to perform a first laser scanning on a blade (201) of a construction machine (200) and to perform a second laser scanning on an area in which the construction machine (200) has operated,
**characterized in that** the laser scanning system further comprises a controller configured to cause the first laser scanning to be performed at a frequency higher than a frequency of the second laser scanning.

7. A non-transitory computer recording medium storing computer executable instructions for performing laser scanning, the computer executable instructions being made to, when read and executed by a computer processor (100), cause the computer processor (100) to:
make a laser scanning apparatus (300) perform a first laser scanning on a blade (201) of a construction machine (200); and
make the laser scanning apparatus (300) perform a second laser scanning on an area in which the construction machine (200) has operated,
**characterized in that** the first laser scanning is performed at a frequency higher than a frequency of the second laser scanning.

## Patentansprüche

1. Laserscanverfahren, umfassend:
ein erstes Laserscannen, das an einer Schaufel (201) einer Baumaschine (200) durch eine Laserscannvorrichtung (300) durchgeführt wird; und
ein zweites Laserscannen, das durch die Laserscanvorrichtung (300) an einem Bereich durchgeführt wird, in dem die Baumaschine (200) gearbeitet hat,
**dadurch gekennzeichnet, dass** das erste Laserscannen mit einer Frequenz durchgeführt wird, die höher ist als eine Frequenz des zweiten Laserscannens.

2. Laserscanverfahren nach Anspruch 1, wobei das erste Laserscannen durchgeführt wird, um die Schaufel (201) zu steuern.

3. Laserscanverfahren nach Anspruch 1 oder 2, wobei das zweite Laserscannen über einen Scanbereich durchgeführt wird, der mindestens einen Teil der Baumaschine (200) abdeckt.

4. Laserscanverfahren nach einem der Ansprüche 1 bis 3, wobei der Betrieb vom ersten Laserscannen zum zweiten Laserscannen umgeschaltet wird, basierend auf einer Position der Schaufel (201), die durch das erste Laserscannen identifiziert wird.

5. Laserscanverfahren nach Anspruch 4, wobei der Betrieb vom ersten Laserscanning zum zweiten Laserscanning umgeschaltet wird, in Antwort darauf, dass ein Abstand zwischen der Position der Schaufel (201), die durch das erste Laserscannen identifiziert wird, und einem Arbeitsziel der Schaufel (201) einen vorbestimmten Wert überschreitet.

6. Laserscansystem, umfassend:
eine Laserscanvorrichtung (300), die konfiguriert ist, um ein erstes Laserscannen an einer Schaufel (201) einer Baumaschine (200) durchzuführen, und ein zweites Laserscannen an einem Bereich durchzuführen, in dem die Baumaschine (200) gearbeitet hat,
**dadurch gekennzeichnet, dass** das Laserscansystem des Weiteren eine Steuereinheit umfasst, die konfiguriert, um zu bewirken, dass das erste Laserscannen mit einer Frequenz durchgeführt wird, die höher ist als eine Frequenz des zweiten Laserscannens.

7. Nicht-transitorisches Computeraufzeichnungsmedium, das computerausführbare Anweisungen zum Durchführen eines Laserscannens speichert, wobei die computerausführbaren Anweisungen so gestaltet sind, dass sie, wenn sie von einem Computerprozessor (100) gelesen und ausgeführt werden, den Computerprozessor (100) dazu veranlassen:
eine Laserscanvorrichtung (300) zu veranlassen, ein erstes Laserscannen an einer Schaufel (201) einer Baumaschine (200) durchzuführen; und
die Laserscanvorrichtung (300) zu veranlassen, ein zweites Laserscannen an einem Bereich durchzuführen, in dem die Baumaschine (200) gearbeitet hat,
**dadurch gekennzeichnet, dass** das erste Laserscannen mit einer Frequenz durchgeführt wird, die höher ist als eine Frequenz des zweiten Laserscannens.

## Revendications

1. Procédé de balayage laser comprenant:
un premier balayage laser effectué sur un godet (201) d'un engin de chantier (200) par un dispositif de balayage laser (300); et
un deuxième balayage laser effectué par le dispositif de balayage laser (300) sur une zone dans laquelle l'engin de chantier (200) a travaillé,
**caractérisé par le fait que** le premier balayage laser est effectué à une fréquence qui est supérieure à une fréquence du deuxième balayage laser.

2. Procédé de balayage laser selon la revendication 1, dans lequel le premier balayage laser est effectué afin de commander le godet (201).

3. Procédé de balayage laser selon la revendication 1 ou 2, dans lequel le deuxième balayage laser est effectué sur une plage de balayage qui couvre au moins une partie de l'engin de chantier (200).

4. Procédé de balayage laser selon l'une quelconque des revendications 1 à 3, dans lequel on fait passer le fonctionnement du premier balayage laser au deuxième balayage laser sur la base d'une position du godet (201) qui est identifiée par le premier balayage laser.

5. Procédé de balayage laser selon la revendication 4, dans lequel on fait passer le fonctionnement du premier balayage laser au deuxième balayage laser en réponse au fait qu'une distance entre la position du godet (201) identifiée par le premier balayage laser et une cible de travail du godet (201) dépasse une valeur prédéterminée.

6. Système de balayage laser comprenant:
un dispositif de balayage laser (300) qui est configuré pour effectuer un premier balayage laser sur un godet (201) d'un engin de chantier (200) et pour effectuer un deuxième balayage laser sur une zone dans laquelle l'engin de chantier (200) a travaillé,
**caractérisé par le fait que** le système de balayage laser comprend en outre une unité de commande qui est configurée pour provoquer que le premier balayage laser est effectué à une fréquence qui est supérieure à une fréquence du deuxième balayage laser.

7. Support d'enregistrement informatique non transitoire stockant des instructions exécutables par ordinateur pour la réalisation d'un balayage laser, les instructions exécutables par ordinateur étant conçues pour, lorsqu'elles sont lues et exécutées par un processeur informatique (100), amener le processeur informatique (100) à:
faire effectuer par un dispositif de balayage laser (300) un premier balayage laser sur un godet (201) d'un engin de chantier (200); et
faire effectuer par le dispositif de balayage laser (300) un deuxième balayage laser sur une zone dans laquelle l'engin de chantier (200) a travaillé,
**caractérisé par le fait que** le premier balayage laser est effectué à une fréquence qui est supérieure à une fréquence du deuxième balayage laser.
